Europäisches Patentamt

(19) European Patent Office     (11) Publication number:     **0 145 693**

Office européen des brevets     **B1**

(12) **EUROPEAN PATENT SPECIFICATION**

(45) Date of publication of patent specification: **19.04.89**     (51) Int. Cl.⁴: **B 01 D 9/00**

(21) Application number: **84870163.7**

(22) Date of filing: **04.12.84**

(54) **High efficiency column crystallizer.**

(30) Priority: **05.12.83 US 558142**

(43) Date of publication of application:
**19.06.85 Bulletin 85/25**

(45) Publication of the grant of the patent:
**19.04.89 Bulletin 89/16**

(84) Designated Contracting States:
**AT CH DE FR GB LI NL SE**

(56) References cited:
**EP-A-0 034 852
CH-A- 488 479
US-A-3 319 437
US-A-3 392 539**

(73) Proprietor: **Monsanto Company
Patent Department 800 North Lindbergh
Boulevard
St. Louis Missouri 63167-7020 (US)**

(72) Inventor: **Carter, Don Eugene
7 Williamsburg Road
Creve Coeur Missouri 63141 (US)**
Inventor: **Hsu, Yung Chung
406 Seven Gabels Court
Chesterfield Missouri 63017 (US)**
Inventor: **Tang, Jason Jean-Fay
12261 Fox Point Drive
Maryland Heights Missouri 63043 (US)**

(74) Representative: **Lunt, John Cooper et al
Monsanto Europe S.A. Patent Department
Avenue de Tervuren 270-272 Letter Box No 1
B-1150 Brussels (BE)**

Courier Press, Leamington Spa, England.

Description

Background of the Invention

The present invention relates to an improved countercurrent solid-liquid contacting apparatus, and more particularly to column crystallizer apparatus employing the use of crystal beds to suppress undesirable axial liquid mixing thereby increasing separation efficiency.

Column crystallizer apparatus are generally used for purifying organic mixtures by fractional crystallization of solute accomplished by countercurrently contacting solute crystals and mother liquor. In a typical column crystallizer, moving internals such as screws, scrapers, trays or balls are employed to transport crystal solids from one end of the column to the other end where the crystals are melted. A portion of the crystal melt is withdrawn as product while the rest is refluxed. The column internals can also be used to promote mass transfer between crystal solids and mother liquor thereby decreasing the size of equilibrium stages.

For example, the column crystallizer disclosed in GB—A—1,365,536 comprises a plurality of vibrating perforated plates positioned at spaced intervals in the column. A plurality of freely movable bodies are disposed on the surface of the perforated plates. The entire column assembly is subjected to vertical reciprocations so that the movable bodies agitate and bounce on the perforated plates. The action of the movable bodies comminute any crystal aggregates formed. A scraped surface cooling unit, located at the top of the column, produces the initial crop of crystals. A heating unit, located at the bottom, melts the purified crystals thereby permitting easy product recovery.

US—A—3 392 539 describes a column crystallizer having a plurality of perforated plates horizontally disposed and spaced apart throughout the column, with downcomers traversing alternate perforated plates. Steel balls having diameters greater than the sizes of the openings in the plates can be used as a support for solid material. Heat exchange coils are disposed in the spaces between the perforated plates, with alternate coils acting to heat and to cool alternate spaces. Pulse means are provided for subjecting the body of liquid and crystals within the crystallizer column to pulsations.

EP—A—0 034 852 discloses a crystallization column having a number of perforated plates, substantially spherical bodies in contact with said perforated plates but moveable relative thereto, and means for vibrating the perforated plates coupled to means for moving the liquid in the column with respect to the perforated plates by a reciprocating movement.

EP—A—0 119 978, which has a priority date earlier than that of the present application but was published after the priority date of the present application, describes a crystallizer column in which a plurality of substantially horizontal perforated plates are fixed to a support member located axially within the column. A plurality of mobile bodies is located on the upper surfaces of the plates. The apparatus includes heat transfer means within the crystallizer housing disposed substantially parallel to the support member. The apparatus also includes excitation means cooperating with the support member and adapted to impart to the support member a fast waveform to cause the plates to vibrate and a slow waveform to cause translational movement of the plates for scraping the surface of the heat transfer means.

The effectiveness of the above-described apparatus in obtaining high purity crystals is limited due to axial liquid mixing in the column. Experimental evidence indicates that liquid on each side of a vibrating plate mixes due to flow through the plate perforations and the clearance between the plate circumference and the column wall. Axial liquid mixing causes impure mother liquor in the top of the column to travel downward and mix with purer crystal product melt in the bottom of the column, thereby greatly reducing the separation efficiency of the column. Axial liquid mixing can be reduced by operating with a more concentrated crystal slurry. However, operating at high crystal slurry concentrations inhibits the comminuting action of the movable bodies.

Axial liquid mixing is known to become more severe in large diameter columns. The designer of commercial scale crystallization equipment must also contend with the problems of liquid channeling and by-passing found in large diameter columns. Because of these difficult mixing problems, only limited success has been realized on scale-up of pilot plant column crystallizers to commercial size equipment.

It is the overall object of the present invention to provide an improved column crystallizer apparatus.

It is, therefore, an object of the present invention to provide a set of improved internals for reducing the axial liquid mixing in a column crystallizer apparatus.

It is another object of the present invention to provide an improved column crystallizer apparatus capable of efficiently crystallizing systems having small differences between solid and liquid densities.

It is still another object of the present invention to provide an efficient column crystallizer apparatus which can be economically scaled-up to commercial size.

According to the present invention, there is provided a column crystallization apparatus comprising in combination:

a) a crystallizer housing having conduit means for ingress of solution to be crystallized, conduit means for recovery of mother liquor and conduit means for recovery of product crystal melt;

b) a cooling means in fluid communication with the top portion of said housing adapted to generate crystals;

c) a plurality of perforated plates positioned at predetermined intervals along and essentially perpendicular to the major axis of said housing, said perforated plates substantially conforming to the interior shape of the said housing;

d) at least one support member, for example a vertical shaft, fixed to said perforated plates such that said perforated plates are maintained in the position described in part (c), said support member being capable of translational movement along the length of the crystallizer;

e) excitation means cooperating with said support member and adapted to impart a fast waveform to cause the perforated plates to vibrate thereby aiding the passage of crystal fragments therethrough;

f) excitation means cooperating with said support member and adapted to impart a slow waveform to cause slow translational movement of said perforated plates for positive transport of crystals;

g) melting means in fluid communication with the bottom portion of said housing adapted to melt purified crystals from the bottom of said crystallizer housing; and

h) crystal bed support means stationarily positioned (for example by attachment to the inner wall of the crystallizer housing) at a predetermined distance below said perforated plates and substantially parallel to said perforated plates, said crystal bed support means having an aperture to permit the said at least one support member to pass therethrough and an open structure which permits the transport of crystals therethrough.

In preferred embodiments of the invention, comminuting means, for example mobile bodies, substantially cover the surface area of each perforated plate.

The excitation means is preferably a compound excitation device to produce both the fast and slow waveforms. The fast waveform is a low amplitude, high frequency waveform that results in the mobile bodies colliding with one another, the shaft, the column wall and with the perforated plate thereby comminuting crystal aggregates. The slow waveform is a high amplitude, low frequency waveform that causes the perforated plate to lower to a predetermined level above the surface of the crystal bed support tray. The slow linear movement of the perforated plates provides positive transport of crystals within the column crystallizer by collecting the crystals on the leading side of the perforated plate when moving toward the crystal support tray adjacently below. Positive transport of crystals makes possible efficient crystallization in systems having small differences in density between crystals and mother liquor. The positive transport of crystals of the present invention also increases crystallizer throughput.

During the initial start-up, a crystal bed forms on the upper surface of each support tray having a bed thickness equal to the clearance between perforated plates and adjacent crystal bed support tray at the end of the downward stroke of the slow waveform. During steady-state operation, crystals are deposited at the upper surface of the crystal bed and an equal amount of crystals pushed through the support tray to the stage below. Hence, crystal bed thickness is maintained essentially constant while providing for positive transport of crystals down the crystallizer column.

The crystal beds reduce axial liquid mixing thereby preventing the impure mother liquor in the top of the column from traveling downward and mixing with purer crystal product melt in the bottom of the column and, as a result, increases the separation efficiency of the column crystallizer.

Brief Description of the Drawings

FIG. 1 is a longitudinal, cross-sectional view of a high efficiency column crystallizer according to the present invention.

FIG. 2 is an overhead view of one embodiment of the crystal bed support tray according to the present invention.

FIG. 3 is a longitudinal, cross-sectional view of the experimental high efficiency column crystallizer according to the present invention.

Detailed Description of the Preferred Embodiments

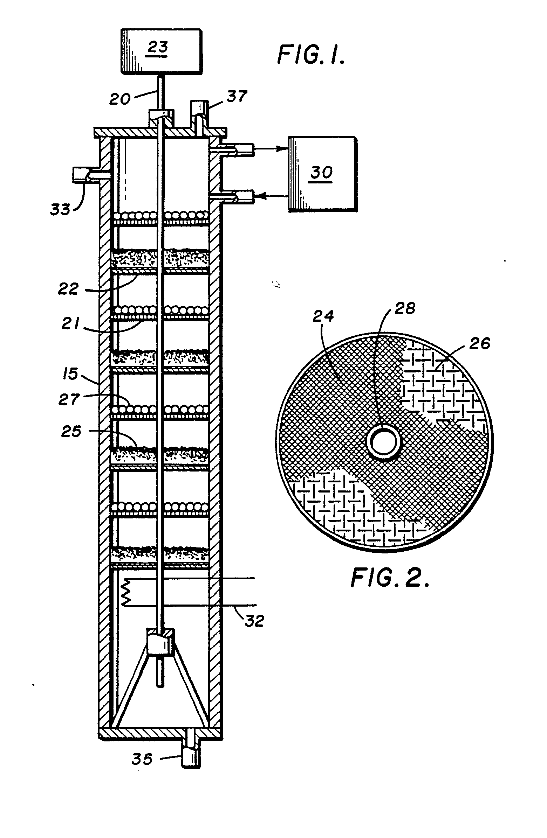

Referring to Figure 1, there is shown one embodiment of the present invention wherein a vertical shaft 20 passes along the axis of crystallizer enclosure 15. A plurality of horizontal perforated plates 21 are attached to vertical shaft 20. Perforated plates 21 are fabricated so that the perforations are relatively small but large enough to allow crystals to pass therethrough. By describing the plates as perforated it is meant that the plates have apertures of any suitable cross-sectional shape such as round, elliptical, rectangular, square, triangular, etc. The perforated plates are sized so that their circumference is within about one-eighth inch of cylindrical enclosure 15. However, it should be understood that exact tolerances will depend on actual unit diameter and the cost of fabrication and erection. While the preferred embodiment herein described refers to perforated plates, it is evident to one skilled in the art that any sufficiently rigid semipermeable platen such as wire mesh platen and Johnson screens which comprise a matrix assembly of rigid metal bars can be used in the present invention.

While in the preferred embodiment a horizontal crystal bed support tray 22 is positioned at a predetermined distance below each perforated plate 21, it should be evident that fewer support trays may be used in a column crystallizer. Support trays 22 are secured to the inner wall of enclosure 15 so that trays 22 are stationary with respect to enclosure 15. However, for large diameter support trays contemplated for commercial size equipment it may be desirable to anchor the trays to a plurality of support members extending upward from the column base through apertures fabricated in the perforated plates and support trays. Support trays 22 are fabricated with central aperture so that vertical shaft 20 passes therethrough. The clearance between crystal tray 22 and vertical shaft 20 is preferably minimized to reduce the by-passing of mother liquor. Likewise, the clearance between the outer circumference of the trays and the inner wall of the enclosure is also minimized.

Vertical shaft 20 is attached to a compound excitation device 23 capable of transmitting reciprocating axial movement to the vertical shaft. Mobile bodies 27, preferably of spherical shape, are placed on each perforated plate 21. The mobile bodies cover greater than about 10% of the area of each perforated plate. In some instances it may be beneficial to have more than one layer of mobile bodies on selected perforated plates. Mobile bodies should be large enough not to penetrate the perforations in the horizontal plates or penetrate the clearance between the circumference of plate 21 and the inner wall of enclosure 15. It should be understood that the exact size and density of the mobile bodies, extent of plate coverage and materials of construction will necessarily depend on the specific application.

The compound excitation device 23 imparts two axial motion waveforms to shaft 20. One waveform, hereinafter called the fast waveform, is a high frequency, low amplitude waveform which causes the mobile bodies to agitate and bounce on the perforated plates, impacting themselves, and the perforated plates thereby comminuting crystal aggregates. Repeated impacts of the mobile bodies also keep the plate surface, shaft and column walls free of incrustations. A suitable waveform for this motion is a sinusoidal waveform with amplitude of about 1 mm (2 mm peak to peak) and frequency of 25 hertz. However, it should be understood that other waveforms having other combinations of amplitude and frequency particularly non-sinusoidal waveforms may be used to impart an appropriate motion on the mobile bodies. Waveforms in which acceleration is constant are particularly preferred to minimize stresses in the equipment. The preferred amplitude range is from about 0.1 mm to about 10 mm, although higher or lower amplitude may be useful in specific applications. The frequency of the fast waveform must be at least great enough to overcome gravity and to cause the mobile bodies to bounce around and impact one another. Mechanical limitations set the practical upper limit which would approximately reside in the 40—200 hertz range. The preferred range is from the minimum to cause mobile bodies 25 to bounce to about 40 hertz. However, it should be understood that other comminuting means may be used in place of the mobile bodies. For example, a side stream of crystallizer slurry could be withdrawn from each crystallizer stage, the crystal aggregates contained therein comminuted by conventional mechanical grinding means, and then returned to the stage from which it was withdrawn. However, it should be evident to those skilled in the art that comminuting means will not be required for all systems since crystals may be structurally weak and will break apart when impacted by the vibrating perforated plates.

The other waveform, hereinafter called the slow waveform, is a slower, larger amplitude waveform than the first waveform. The slower waveform causes perforated plates 21 to move periodically along the length of the column toward the adjacent stationary support tray 22 positioned below. The amplitude of this slow waveform is adjusted to leave a crystal bed 25 of predetermined thickness on the upper surface of support tray 22. The velocity of the slow waveform is preferably linear with displacement, although other waveforms are possible and in some instances may be preferred. The temporal duration of the upward and downward tray movements need not be equal. A longer duration for the upward than the downward is preferred. The preferred total duration for the slow waveform cycle is in the range of less than about one to more than three minutes although this is not considered critical. The preferred amplitude (peak to peak) is slightly less than the spacing between adjacent crystal bed support trays 22 minus the height of the mobile bodies minus the desired crystal bed thickness. The preferred bed thickness is in the range of 2.5 to 10 cm. It should be understood that other crystal bed thicknesses may be advantageous in some instances.

In the preferred embodiment, the fast waveform is not operated during the downward stroke of the perforated plates. During the downward stroke of the slow waveform, layers of crystals form on the lower surfaces of the plates occluding the perforations therethrough and permitting the deposit of the crystals from each stage onto the upper surface of the crystal bed support tray below. As crystals are deposited on the upper surface of the crystal bed support tray, an essentially equal amount of crystals are freed from the lower surface of the tray and pushed into the stage adjacently below thereby maintaining an essentially constant crystal bed thickness. The fast waveform is operated on the upward stroke of the slow waveform to cause plate vibration and mobile body agitation thereby opening plate perforations and comminuting crystals passed from the stage adjacently above. It should be understood that in some instances, such as when crystals settle unusually rapidly due to size and concentration, the fast waveform may need to be operated during the downward stroke of the slow waveform. It should be further understood that a pause at the end of the downward stroke of the slow waveform, during which the fast waveform is operated, may be required to break up possible formation of a hard crystal cake in the crystal bed and to push loose crystals through the crystal bed support tray to the stage adjacently below.

Referring to Figure 2, there is shown one embodiment of the stationary crystal bed support tray of the present invention. Crystal trays 22 have a larger open area and larger hole size than perforated plates 21. Typically, a perforated plate has about 50% open area and a hole diameter of the order of 20mm. The preferred open area of the crystal tray 22 is in the range of about 40% to 80%. The preferred individual hole area of the crystal tray is about 2 to 4 times the individual hole area of the perforated plate.

Crystal tray 22 comprises a thin wire screen 24 supported from underneath by support grid 26. The wire diameter of the fine wire screen should be as small as possible to allow maximum open area while maintaining sufficient mechanical strength to prevent wire screen 24 from tearing during use. Support grid 26 is made of heavier wire than wire screen 24 to provide sufficient mechanical strength to backstop the fine wire screen against the impact delivered during the downward stroke of the perforated plate adjacently above. An opening 28 conforming to the cross-sectional shape of shaft 20 is fabricated in crystal tray 22 for vertical shaft 20 to pass therethrough. Opening 28 should be slightly larger than the shaft size so that the shaft can move inside the opening without restriction while minimizing the by-passing of mother liquor.

Referring again to Figure 1, a cooling unit 30, for example, a scraped surface cooling unit as disclosed in *Chemical and Process Eng.*, 1970, 51 (11) pp. 59-65. is positioned in fluid communication with the top of enclosure 15. The mother liquor to be crystallized is withdrawn from a point near the top of the column and fed to cooling unit 30. The resulting crystal slurry exiting therefrom is returned to the column at a point below that from which the mother liquor was withdrawn. While the embodiment exemplified herein is described with reference to an external cooling unit it should be understood that the cooling unit may be positioned on the interior of the crystallizer enclosure. Suitable internal cooling units include a cooling coil kept free of incrustation by ultrasonic means and scraped surface cooling units. Cooling unit 30 produces the initial crop of crystals which is purified as it passes down the crystallizer column. In the preferred continuous countercurrent operation, solution to be crystallized is fed to the crystallizer column continuously through solution inlet port 33. While it is evident to one skilled in the art that the feed solution should be introduced into the column where it most nearly matches the mother liquor composition, it may be introduced in other places and is most often fed into the cooling unit. Purified crystals are melted by heating unit 32 and removed as crystal product melt through crystal product melt outlet port 35. Mother liquor is withdrawn through mother liquor outlet port 37.

To operate the above-described crystallizer, one closes the crystal melt outlet port 35, fills enclosure 15 with solution to be crystallized through feed solution inlet port 33 and then starts the compound excitation device. Next, one start the flow of cooling fluid through cooling unit 30. After sufficient heat has been removed nucleation will occur and crystals formed will begin passing down the column. Total crystal melt reflux is maintained until a steady-state thickness of crystals is accumulated in each crystal bed. After a reasonably short time to ensure steady-state crystal bed formation, fresh feed is added through inlet port 33 and mother liquor withdrawn through outlet port 37. Partial reflux operation is now maintained wherein a part of the crystal product melt is withdrawn and the remainder of the crystal product melt is returned to the bottom of the column and passed upward as reflux to the top of the column. In this way, a concentration gradient is maintained along the crystallizer length as in fractional distillation. It is evident to those skilled in the art that partial reflux can be easily accomplished by only removing a portion of the crystal melt and permitting the remainder to travel up the column. It is further evident that the steady-state crystal melt reflux ratio will vary with the product purity desired and column length as in fractional distillation and that the steady-state reflux ratio will vary with the solution to be crystallized.

While the present invention has been described with respect to countercurrent crystallizer apparatus, it will be understood by those skilled in the art that the present invention is equally applicable to other countercurrent solid-liquid contacting apparatus such as leaching apparatus. The stationary solid beds and transport means of the present invention would likewise increase the efficiency of conventional leaching apparatus by decreasing liquid axial back-mixing while promoting positive transport of solids. In leaching apparatus there would not necessarily be a need for comminuting means since the solids do not increase in size as in crystallization. Moreover, while the present invention has been described with reference to systems wherein the solid phase is more dense than the liquid phase, it will be evident to those skilled in the art that the present invention can be easily adapted to accommodate systems wherein the solid phase is less dense than the liquid phase and, therefore, is considered within the scope of the present invention. In such a situation, one would only need to invert the column crystallizer structure. That is, the cooling unit would be located in the lower portion of the column along with the feed inlet port. The crystal melt outlet port and melting means would be positioned in the top of the column and the mother liquor exit port in the bottom of the column. Crystals would collect on the under-side of the support trays and be transported to the stage adjacently above by the upward motion of the perforated plates. Comminuting means, if needed, may be accomplished by side-stream withdrawal and conventional grinding as described above.

Example

A perforated plate column crystallization apparatus with and without stationary crystal bed support trays as described above was used to purify a mixture of para-dichlorobenzene (p-DCB) and ortho-dichlorobenzene (o-DCB). The column employed a set of vertical scraped surface cooling tubes in fluid communication with the top of the column for making crystals and a heating coil in the bottom of the column for melting the purified crystals. Specifications for the column crystallizer are given below in Table I.

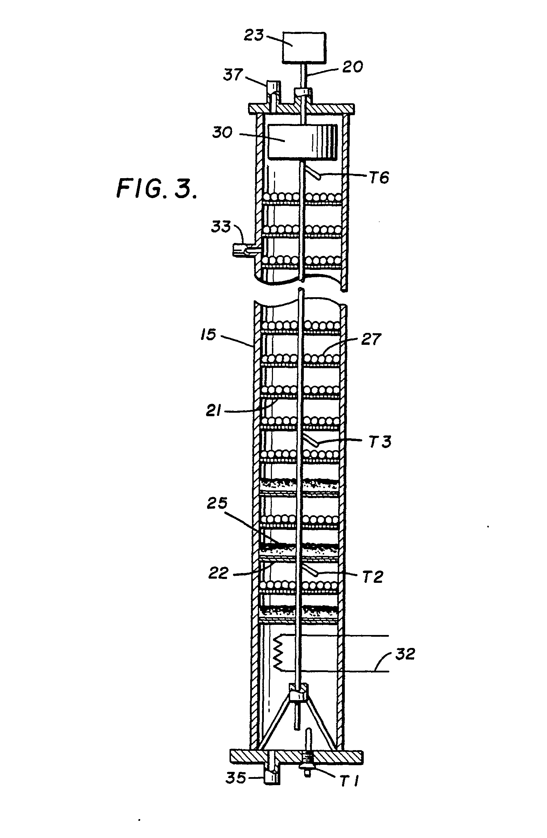

Case I represents the original column without stationary crystal bed support trays. Case II represents the modified column containing three support trays in place of three perforated plates. An illustration of the modified column of Case II is shown in Figure 3.

Table I

Case-I

Column

| | | |
|---|---|---|
| | Material | glass |
| | I.D. | 10.16 cm |
| | Overall height | 198.12 cm |

Perforated Plates

| | | |
|---|---|---|
| | Material | stainless steel |
| | No. of plates | 13 |
| | Perforations | |
| |   diameter | 2 mm |
| |   pitch | triangular on 3 mm centers |
| | Thickness | 1.59 mm |
| | Spacing | 101.6 mm |

Mobile Bodies      spheres

| | | |
|---|---|---|
| | Material | stainless steel |
| | No. of spheres/tray | 95 |
| | diameter | 9 mm |

Fast Waveform      Sinusoidal

| | | |
|---|---|---|
| | Frequency | 25 Hz |
| | Amplitude | 2 mm peak to peak |

Slow Waveform      linear

| | | |
|---|---|---|
| | Stroke | 101.6 mm peak to peak |
| | Upward Speed | 5.08 mm/second |
| | Downward Speed | 18.54 mm/second |
| | Pause at | |
| |   downward limit | 2 seconds |

Case II

Case II equipment is the same as Case I except that the first, third and fifth perforated plates and balls thereon were removed and three stationary crystal bed support trays as described below were installed in the vacant spaces.

Stationary Crystal Bed Support Trays

| | | |
|---|---|---|
| | Material | stainless steel |
| | Wire Screen | 6 mesh |
| | Wire Diameter | 0.71 mm |
| | Opening (square) | 3.53 mm |
| | Support Grid | 2 mesh |

EP 0 145 693 B1

| Material | stainless steel |
|---|---|
| Wire Diameter | 3.05 mm |
| Opening | 9.65 mm |

The solution to be crystallized consisting of p-DCB and o-DCB was fed to the above-described column. The column was operated in both total reflux and continuous feed modes. Experimental results are summarized in Table II and Table III.

Runs 1, 2 and 3 were run on the crystallizer column as described in Case I of Table I.

Runs 4, 5 and 6 were run on the modified crystallizer column as described in Case II of Table I. After reaching steady-state operation, a crystal bed about 2 inches thick was maintained on the upper surface of each crystal bed support tray.

The most reliable indication of the effect of the crystal beds on the separation efficiency of the experimental column is the change in the temperature gradient in the vicinity of the crystal beds. A steeper temperature gradient indicates better separation efficiency. Temperature measurements Tl through T6 were obtained for Run 1 through 6 at intervals from the bottom to the top of the column as shown in Figure 3. Special attention is directed to temperature T2 and T3 shown in Table II since these measurements were taken at points in the column directly above and below the location of the crystal beds in the modified column.

## TABLE II

### Temperature ($^{\circ}$C)

| Run | T1 | T2 | T3 | T4 | T5 | T6 |
|---|---|---|---|---|---|---|
| 1 | 53.0 | 45.5 | 43.0 | 39.5 | 36.0 | 24.5 |
| 2 | 53.0 | 52.5 | 52.0 | 50.2 | 49.0 | 46.5 |
| 3 | 53.0 | 52.8 | 50.0 | 47.0 | 45.0 | 43.0 |
| 4 | 54.0 | 52.5 | 44.0 | 42.0 | 38.0 | 30.0 |
| 5 | 53.5 | 50.5 | 43.5 | 42.0 | 39.0 | 22.0 |
| 6 | 53.0 | 53.5 | 44.0 | 42.5 | 40.5 | 34.0 |

As shown in Table II, a consistent improvement in separation efficiency was observed in this area of the modified column as evidenced by the steeper temperature gradients between temperature measurement T2 and T3. The differences between measurements T2 and 3 for Runs 4, 5 and 6 (modified column) were all between 7° and 9°C, while Runs 1, 2 and 3 (original column) showed differences between 0.5° and 2.8°C.

Table III shows the overall mass balance for Runs 1 through 6. The most significant improvement can be observed by comparing the increases in product purity between feed and product in continuous feed Runs 3 and 5. In Run 5 with the modified column the purity of p-DCB was increased from 74.7% in feed to 98.5% in bottom product, while in Run 3 with the original column, the increase was only from 90.4% in feed to 95.7% in bottom product.

It is evident to those skilled in the art that the increased column temperature gradient and corresponding increased separation efficiency described above can be further enhanced when additional crystal bed support trays are used in the upper part of the crystallizer column.

7

TABLE III

| Run | Equipment Description | Operation Mode | Flow Rate (lb/hr) | | | Concentration (% p-DCB) | | | Cooling Fluid, (°C) |
|---|---|---|---|---|---|---|---|---|---|
| | | | Feed | Product | Mother liquor | Feed | Product | Mother Liquor | |
| 1 | Case I | Total Reflux | 0 | 0 | 0 | 75.0 | 96.9 | -- | -4 |
| 2 | Case I | Continuous | 8.0 | 6.0 | 2.0 | 91.0 | 95.5 | 82.4 | 31.5 |
| 3 | Case I | Continuous | 8.0 | 6.0 | 2.0 | 90.4 | 95.7 | 75.1 | 17.5 |
| 4 | Case II | Total Reflux | 0 | 0 | 0 | 75.0 | 97.8 | -- | 5.5 |
| 5 | Case II | Continuous | 11.5 | 6.0 | 5.5 | 74.7 | 98.5 | 48.3 | 2.5 |
| 6 | Case II | Total Reflux | 0 | 0 | 0 | 75.0 | 96.6 | -- | 19 |

# EP 0 145 693 B1

**Claims**

1. A column crystallization apparatus comprising in combination:

a) a crystallizer housing (15) having conduit means (33) for ingress of solution to be crystallized, conduit means (37) for recovery of mother liquor and conduit means (35) for recovery of product crystal melt;

b) a cooling means (30) in fluid communication with the top portion of said housing adapted to generate crystals;

c) a plurality of perforated plates (21) positioned at predetermined intervals along and essentially perpendicular to the major axis of said housing, said perforated plates substantially conforming to the interior shape of the said housing;

d) at least one support member (20) fixed to said perforated plates such that said perforated plates are maintained in the position described in part (c), said support member being capable of translational movement along the length of the crystallizer;

e) excitation means (23) cooperating with said support member and adapted to impart a fast waveform to cause the perforated plates to vibrate thereby aiding the passage of crystal fragments therethrough;

f) excitation means (23) cooperating with said support member and adapted to impart a slow waveform to cause slow translational movement of said perforated plates for positive transport of crystals;

g) melting means (32) in fluid communication with the bottom portion of said housing adapted to melt purified crystals from the bottom of said crystallizer housing; and

h) crystal bed support means (22) stationarily positioned at a predetermined distance below said peforated plates and substantially parallel to said perforated plates, said crystal bed support means having an aperture (28) to permit support member (20) to pass therethrough and an open structure which permits the transport of crystals therethrough.

2. The column crystallizer apparatus of Claim 1 further comprising comminuting means (27) positioned near the upper surface of said perforated plates capable of breaking up crystal aggregates so that the crystals can pass through said perforated plates.

3. The apparatus of either of Claims 1 and 2 in which the cooling means (30) is positioned externally with respect to the crystallizer housing.

4. The apparatus of either of Claims 1 and 2 in which the cooling means (30) is positioned internally with respect to the crystallizer housing.

5. The apparatus of Claim 3 in which the externally mounted cooling means has a conduit means for ingress of solution to be crystallized.

6. The apparatus of Claim 2 in which the comminuting means is a plurality of mobile bodies (27) set in agitating motion by the application of the fast waveform.

7. The apparatus of Claim 6 in which the mobile bodies are substantially spherical in shape.

8. The apparatus of either of Claims 6 and 7 in which mobile bodies cover at least about ten percent of the upper surface area of said perforated plates.

9. The apparatus of any of Claims 1 to 8 in which the fast waveform has an amplitude between about 0.1 mm and 10 mm.

10. The apparatus of any of Claims 1 to 9 in which the fast waveform has a frequency less than about 200 hertz.

11. The apparatus of any of Claims 6 to 8 in which the slow waveform has a peak to peak amplitude slightly less than the axial spacing between adjacent crystal bed support means minus the height of the mobile bodies and minus the crystal bed thickness.

**Patentansprüche**

1. Kolonnenkristallisatorvorrichtung, welche in Kombination miteinander:

a) ein Kristallisatorgehäuse (15), welches Leitungsmittel (33) für das Einleiten der zu kristallisierenden Lösung, Leitungsmittel (37) zum Wiedergewinnen der Mutterflüssigkeit und Leitungsmittel (35) zum Wiedergewinnen von Kristallisationsproduktschmelze;

b) eine zur Erzeugung von Kristallen eingerichtete Kühleinrichtung (30), welche in Fließverbindung mit dem Kopfabschnitt des genannten Gehäuses steht;

c) eine Mehrzahl von perforierten Platten (21), welche in vorbestimmten Abständen längs der Hauptachse des genannten Gehäuses und im wesentlichen senkrecht zu dieser angeordnet sind, wobei diese perforierten Platten eine im wesentlichen der Innenform dieses Gehäuses entsprechende Form haben;

d) mindestens ein Tragglied (20), welches mit den genannten perforierten Platten verbunden ist, so daß diese perforierten Platten in ihrer, wie unter c) beschriebenen Lage gehalten werden, wobei dieses Tragglied eine Verschiebebewegung in Längsrichtung des Kristallisators ausführen kann;

e) Erregermittel (23), welche mit dem genannten Tragglied zusammenarbeiten und zur Abgabe einer schnellen Wellenform ausgebildet sind, um die perforierten Platten in Vibration zu versetzen und damit den Durchgang von Kristallteilen zu unterstützen;

f) Erregermittel (23), welche mit dem genannten Tragglied zusammenarbeiten und zur Abgabe einer langsamen Wellenform ausgebildet sind, um den genannten perforierten Platten zum Herbeiführen eines zwangsweisen Transports von Kristallen eine langsame Verschiebebewegung zu erteilen;

g) eine zum Schmelzen von gereinigten Kristallen vom Boden des genannten Kristallisatorgehäuses eingerichtete Schmelzeineinrichtung (32), welche in Fließverbindung mit dem Bodenabschnitt des genannten Gehäuses steht; und

h) Kristallbetttragmittel (22), welche in einem vorbestimmten Abstand unter den perforierten Platten und im wesentlichen parallel zu diesen perforierten Platten stationär angeordnet sind, wobei diese Kristallbetttragmittel eine Öffnung (28) haben, um einen Durchtritt der Tragmittel (20) zu gestatten, und eine offene Struktur bilden, welche den Transport von Kristallen hindurch erlaubt; aufweist.

2. Kolonnenkristallisatorvorrichtung nach Anspruch 1, dadurch gekennzeichnet, daß die Vorrichtung weiter Zerkleinerungsmittel (27) aufweist, welche nahe der Oberseite der genannten perforierten Platten angeordnet sind und zum Aufbrechen von Kristallaggregaten ausgebildet sind, damit die Kristalle durch die genannten perforierten platten passieren können.

3. Vorrichtung nach Anspruch 1 oder 2, dadurch gekennzeichnet, daß die Kühleinrichtung (30) außerhalb des Kristallisatorgehäuses angeordnet ist.

4. Vorrichtung nach Anspruch 1 oder 2, dadurch gekennzeichnet, daß die Kühleinrichtung (30) innerhalb des Kristallisatorgehäuses angeordnet ist.

5. Vorrichtung nach Anspruch 3, dadurch gekennzeichnet, daß die außerhalb angebrachte Kühleinrichtung Leitungsmittel für das Einleiten der zu kristallisierenden Lösung aufweist.

6. Vorrichtung nach Anspruch 2, dadurch gekennzeichnet, daß die Zerkleinerungsmittel durch eine Mehrzahl von beweglichen Körpern (27) gebildet sind, welche durch Einwirkenlassen der schnellen Wellenform in schüttelnde Bewegung versetzt werden.

7. Vorrichtung nach Anspruch 6, dadurch gekennzeichnet, daß die beweglichen Körper im wesentlichen kugelförmig sind.

8. Vorrichtung nach Anspruch 6 oder 7, dadurch gekennzeichnet, daß die beweglichen Körper mindestens etwa 10% des oberen Oberflächenbereiches der genannten perforierten platten bedecken.

9. Vorrichtung nach einem der Ansprüche 1 bis 8, dadurch gekennzeichnet, daß die schnelle Wellenform eine Amplitude zwischen etwa 0,1 mm und 10 mm aufweist.

10. Vorrichtung nach einem der Ansprüche 1 bis 9, dadurch gekennzeichnet, daß die schnelle Wellenform eine Frequenz von weniger als etwa 200 Hz aufweist.

11. Vorrichtung nach einem der Ansprüche 6 bis 8, dadurch gekennzeichnet, daß die langsame Wellenform eine Spitze-Spitze Amplitude aufweist, welche etwas geringer ist, als der axiale Abstand zwischen benachbarten Kristallbetttragmitteln abzüglich der Höhe der beweglichen Körper und abzüglich der Dicke des Kristallbettes.

## Revendications

1. Un appareil constitué d'une colonne de cristallisation comprenant, en combinaison:

a) un logement de cristallisateur (15) ayant une canalisation (33) pour l'entrée de la solution à cristalliser, une canalisation (37) pour la récupération de la liqueur-mère et une canalisation (35) pour la récupération de la masse fondue des cristaux produits;

b) un dispositif de refroidissement (30) communiquant avec la portion supérieure dudit logement et conçu pour produire des cristaux;

c) plusieurs plateaux perforés (21) placés à des intervalles prédéterminés le long de l'axe principal dudit logement et essentiellement perpendiculaires à celui-ci, lesdits plateaux perforés épousant essentiellement la forme intérieure dudit logement;

d) au moins un élément support (20), fixé auxdits plateaux perforés de façon à ce que lesdits plateaux perforés soient maintenus dans la position décrite en c), ledit élément support pouvant avoir un mouvement de translation sur la longueur du cristallisateur;

e) un dispositif d'excitation (23) coopérant avec ledit élément support et conçu pour établir une forme d'onde rapide provoquant la vibration des plateaux perforés pour faciliter le passage des fragments cristallins à travers ceux-ci;

f) un dispositif d'excitation (23) coopérant avec ledit élément support et conçu pour établir une forme d'onde lente pour provoquer un mouvement lent de translation desdits plateaux perforés pour le transport commandé des cristaux;

g) un dispositif de fusion (32) communiquant avec la portion inférieure dudit logement, conçu pour fondre les cristaux purifiés du fond dudit logement de cristallisateur; et

h) un support de lit de cristaux (22) placé en position fixe à une distance prédéterminée en dessous desdits plateaux perforés et essentiellement parallèle auxdits plateaux perforés, ledit support de lit de cristaux ayant une ouverture (28) pour permettre le passage de l'élément support (20) et une structure ouverte qui permet le transport des cristaux à travers lui.

2. L'appareil constitué d'une colonne de cristallisation de la revendication 1, comprenant de plus un dispositif de fragmentation (27), placé près de la surface supérieure desdits plateaux perforés, capable de fragmenter les agrégats cristallins de façon à ce que les cristaux puissent traverser lesdits plateaux perforés.

3. L'appareil de l'une des revendications 1 ou 2, dans lequel le dispositif de refroidissement (30) est placé à l'extérieur relativement au logement du cristallisateur.

4. L'appareil de l'une des revendications 1 ou 2, dans lequel le dispositif de refroidissement (30) est placé à l'intérieur du logement du cristallisateur.

5. L'appareil de la revendication 3, dans lequel le dispositif de refroidissement monté à l'extérieur a une canalisation pour l'entrée de la solution à cristalliser.

6. L'appareil de la revendication 2, dans lequel le dispositif de fragmentation consiste en plusieurs éléments mobiles (27) soumis à un mouvement d'agitation par l'application de la forme d'onde rapide.

7. L'appareil de la revendication 6, dans lequel les éléments mobiles sont de forme essentiellement sphérique.

8. L'appareil de l'une des revendications 6 ou 7, dans lequel les éléments mobiles couvrent au moins 10 % de la surface supérieure desdits plateaux perforés.

9. L'appareil de l'une quelconque des revendications 1 à 8, dans lequel la forme d'onde rapide a une amplitude entre environ 0,1 mm et 10 mm.

10. L'appareil de l'une quelconque des revendications 1 à 9, dans lequel la forme d'onde rapide a une fréquence inférieure à environ 200 hertz.

11. L'appareil de l'une quelconque des revendications 6 à 8, dans lequel la forme d'onde lente a une amplitude pic à pic légèrement inférieure à la distance axiale entre les supports de lit de cristaux adjacents moins la hauteur des éléments mobiles et moins l'épaisseur du lit de cristaux.

EP 0 145 693 B1

FIG. I.

FIG. 2.

1

FIG. 3.